# EUROPÄISCHE PATENTSCHRIFT

(11) **EP 3 594 410 B1**
(45) Veröffentlichungstag und Bekanntmachung des Hinweises auf die Patenterteilung: **24.03.2021**
(21) Anmeldenummer: 19000329.3
(22) Anmeldetag: 10.07.2019
(51) Int. Cl.: E01F 8/00, E04B 1/84

(54) **LÄRMSCHUTZWAND UND VERFAHREN ZUR ERRICHTUNG**
NOISE BARRIER AND METHOD OF ERECTING SAME
PAROI ANTIBRUIT ET PROCÉDÉ DE CONSTRUCTION

(30) Priorität: 10.07.2018 DE 102018005429
(43) Veröffentlichungstag der Anmeldung: 15.01.2020
(73) Patentinhaber: Holoch, Matthias, 76646 Bruchsal (DE)
(72) Erfinder: Holoch, Matthias, 76646 Bruchsal (DE)
(74) Vertreter: Mehl-Mikus, Claudia

(56) Entgegenhaltungen:
- EP-A1- 0 980 933
- WO-A1-98/12399
- DE-A1- 19 502 051
- DE-A1- 19 517 583
- GB-A- 2 179 232

## Beschreibung

Die Erfindung betrifft eine Lärmschutzwand und ein Verfahren zu deren Errichtung.

Lärmschutzwände verschiedener Art sind aus dem Stand der Technik bekannt. Üblicherweise werden sie an Straßen oder Bahntrassen errichtet und sind aus massiven Baumaterialien, um über erhebliche Streckenlängen Lärm zu reflektieren. Alternativ kann Lärm auch absorbiert werden: Eine Lärmschutzwand, die dies ermöglicht, ist beispielsweise in http://www.g2-gruppegeotechnik.de/downloads/Idee Strohballenwand.pdf beschrieben.

Lärmschutzwände der reflektierenden Art sind auf Grund der Baumaterialien wie Betonelementen oder Ringsteinen aufwändig und teuer zu errichten und ebenso teuer und aufwändig im Rückbau.

Lärmschutzwände aus Stroh hingegen sind günstig in Bezug auf Errichtung oder Rückbau, aber nicht so dauerhaft haltbar auf Grund Verwitterung, beispielsweise durch eindringende Nässe.

In DE 195 17 583 A1 ist eine Lärmschutzwand mit Strohgebinden offenbart, die ein in den Boden eingelassenes Fundament mit Betonsockel, das eine Drainage bereitstellt, und eine Abdeckung als Regenschutz aufweist. Für den Lärmschutz sind die Strohgebinde zu einer Wand gestapelt und werden von einem Rahmen gehalten, der vertikale Stützpfosten aufweist, die in bestimmten Abständen im Fundament verankert sind und sich über die gesamte Höhe der gestapelten Strohgebinde erstrecken. Die Stützpfosten sind untereinander durch horizontal verlaufende Spannträger verbunden. Um die Wand gegen Verrutschen zu sichern, können ferner längs verlaufende Spannhölzer auf die Strohgebinde aufgelegt und mit dem Rahmen verbunden werden.

Aus EP 0 980 933 A1 ist eine aus Lärmschutzmodulen zusammengefügte Lärmschutzwand bekannt. Zwischen zwei durch Pfähle und Querbalken gebildeten Stützwänden, wobei die Pfähle über ein Fundament in den Boden eingebracht sind, sind Strohballen zur Schallabsorption aufgetürmt und mit einem wasserabweisenden Dach überdacht. Die Stützwände können Lamellen aufweisen, die auftreffenden Schall auf das Stroh leiten.

Ausgehend von diesem Stand der Technik ist es Aufgabe der vorliegenden Erfindung, eine Lärmschutzwand zu schaffen, die durch einen verbesserten konstruktiven Aufbau einerseits unter geringem Aufwand günstig zu errichten und auch rückzubauen ist, und die andererseits aber eine verbesserte Haltbarkeit in Bezug auf aus dem Stand der Technik bekannte vergleichbare Lärmschutzwände aufweist.

Diese Aufgabe wird durch eine Lärmschutzwand mit den Merkmalen des Anspruchs 1 gelöst.

Die weitere Aufgabe, ein günstiges Errichtungsverfahren für eine solche Lärmschutzwand zu schaffen, wird durch das Verfahren mit den Merkmalen des unabhängigen Anspruchs 8 gelöst.

Weiterbildungen der Lärmschutzwand und des Errichtungsverfahrens sind in den entsprechenden Unteransprüchen ausgeführt.

Bei einer ersten Ausführungsform der Lärmschutzwand, die mittels einer Vielzahl an Strohballen errichtet ist, ist vorteilhaft die Grundfläche der Lärmschutzwand durch eine Basisschicht mit einer wasserableitenden Funktion gebildet. Hierauf sind viele quaderförmige, unverpackte Strohballen im Mauerverband zu einer Mauer aufgesetzt, auf deren oberenends abschließenden Krone ein Dach angeordnet ist, das vorteilhaft verhindert, dass weder Regen noch Schnee über die Krone der Mauer in die Strohballen eindringen kann - was die Verwitterung der Lärmschutzwand erheblich verringert.

Um ein optimales Lärmdämmungsverhalten aufzuweisen, wird erfindungsgemäß vorgeschlagen, dass die Tiefe der Mauer aus Strohballen ein Verhältnis von 1 zu 2 zu der Höhe der Mauer hat, auch ein Verhältnis von 1 zu 3 wird als günstig angesehen.

Das auf der Mauerkrone der Strohballenmauer angeordnete Dach weist eine Unterkonstruktion auf, für deren Gestaltung in Längsrichtung der Lärmschutzwand verlaufende, auf der Krone aufliegende erste Konstruktionselemente angeordnet sind. Die Unterkonstruktion ist über Befestigungsmittel an der Mauer befestigt. Vorteilhaft sollen zumindest zwei Drittel der Mauer die Unterkonstruktion halten - die Befestigungsmittel wie Stricke, Seile oder Ketten sind also in einer vorbestimmten Höhe der Mauer, die höchstens einem Drittel der Gesamthöhe der Mauer entspricht, zwischen zwei übereinander liegenden Strohballenschichten positioniert, erstrecken sich durch die Mauer und umfassen zumindest ein in Längsrichtung der Lärmschutzwand verlaufendes auf der Krone aufliegendes erstes Konstruktionselement und zumindest die Strohballen, die über dem untersten Drittel der Mauerhöhe liegen.

Somit wird die Bau- und Rückbaubarkeit insbesondere auch dadurch verbessert, dass kein betoniertes Fundament für die Lärmschutzwand errichtet werden muss. Es genügt, den Untergrund für die Lärmschutzwand vor dem Errichten derselben einzuebnen. Es ist auch möglich, die Lärmschutzwand umzusetzen, da auf einen Rahmen für die Strohballen, der mit der Basisschicht oder gar in einem Betonfundament verankert ist, verzichtet wird. An sich muss nicht einmal ein Rahmen für die Strohballen vorab errichtet werden, da die Mauer sich selbst hält und die Befestigungsmittel für die Unterkonstruktion des Dachs unmittelbar beim Errichten zwischen den Strohballen-Lagen angeordnet werden.

Da die Absorption des Lärms nicht nur von der Höhe der Mauer abhängt, über deren Dach die Schallwellen gelangen müssen, die nicht absorbiert werden, sondern auch von deren Tiefe, wird in einer weiteren Ausführungsform der Lärmschutzwand vorgeschlagen, dass die Tiefe der Mauer über die gesamte Höhe der Mauer konstant gleich bleibt.

Die für die Mauer verwendeten Strohballen haben vorteilhaft eine Dichte von mindestens 200 kg/m³, insgesamt wird eine Dichte von 200 bis 300 kg/m³ als bevorzugt angesehen. Die Ballen sind homogen verpresst, da dann eine sehr gute Schallabsorption gegeben ist. Diese Ballen sind vorteilhaft aus Strohhalmen mit Halmlängen von 10 bis 20 cm, bevorzugt von 12 bis 18 cm gepresst. Um diese Halmlängen zu erhalten, werden die Halme vor dem Pressvorgang geschnitten oder gleich bei der Ernte gehäckselt. Halmlängen über 20 cm sind erfahrungsgemäß ungeeignet.

Die Ballen können mit Schnüren oder Bändern gebunden sein, sollen aber nicht umfassend verpackt sein - etwa durch Folie oder Netze -, da dies die Schallabsorption mindert.

Es eignen sich verschiedene quaderförmige Formate der regional verfügbaren Strohpressen, um die Ballen zu schaffen. Wichtig ist, dass die für eine erfindungsgemäße Lärmschutzwand eingesetzten Strohballen eine einheitliche Höhe aufweisen; ihre Breite und Länge können je nach den Anforderungen des Mauerverbandes variieren. Der Begriff des Mauerverbandes wird vom Fachmann verstanden, wichtig ist die Verteilung von Lasten und Kräften innerhalb der Mauer, die durch den gemischten Versatz der Strohballen erreicht wird. Geeigneter Weise werden für optimierten Schallschutz freiliegende, waagrechte Flächen durch eine exakte Anordnung der Quader vermieden.

Der Boden unter der Lärmschutzwand ist kein Bestandteil derselben, aber seine Vorbereitung ist Basis für eine fachlich geeignete Errichtung und im Grund auch Teil des Errichtungsvorgangs oder -verfahrens. Die für die Lärmschutzwand vorgesehene Grundfläche wird entsprechend dem Verlauf der Strohwand planiert und so verdichtet, dass eine möglichst gleichmäßige Dichte des Bodens unterhalb der Lärmschutzwand erreicht wird. Die Konstruktion ist dabei relativ unempfindlich gegen nachträgliche Setzungen, solange diese gleichmäßig in Längsrichtung der Wand verlaufen.

Über diesem Planum wird die erste Schicht als "Basisschicht" der erfindungsgemäßen Lärmschutzwand aufgebaut. Diese kann in einer Ausführungsform der Erfindung eine Schicht aus Drainagematerial, also wasserableitendes Schüttgut, etwa Schottersteine, Kies, Bruchsteine, oder Kombinationen hieraus sein, oder in einer anderen Ausführungsform der Erfindung eine Rahmenanordnung aus einem oder mehreren Rahmenelementen sein. Solche Rahmenelemente können aus Metall, vorteilhaft aus wetterbeständigem verzinktem Stahl, aber auch aus Kunststoff, aus Beton, Stein oder einer Kombination aus den vorgenannten Materialien bestehen. Alternativ zu den Rahmenelementen können analog auch Gitterelemente wie etwa palettenartige Gitterelemente, bspw. aus mehreren Lagen Paletten, eingesetzt werden. Um die Strohballenmauer zu tragen, können beispielsweise viele rechteckige oder quadratische Rahmenelemente zu einem Gesamtrahmen aneinander gereiht werden. Auch andere geometrische Grundformen sind möglich.

Grundsätzlich ist es möglich, eines oder mehrere der Rahmenelemente zu versteifen, etwa durch Streben, die parallel zueinander oder gekreuzt verlaufen können, oder auch im Rahmenelement über Eck liegen können; die Rahmenelemente können aber auch mit Schüttgut, das wasserableitend ist, gefüllt sein.

Die Basisschicht an sich erfüllt erfindungsgemäß vorteilhaft die drei Anforderungen, dass:
- die Strohballenwand lotrecht darauf errichtet werden kann,
- die Unterseite der Strohwand mindestens 15 cm über dem höchsten Niveau des Oberflächenwassers liegt (je nach Kapillarwirkung der verwendeten Materialien auch darüber),
- aus der Strohwand austretende Feuchtigkeit nach unten abgeführt wird.

Die Basisschicht kann - zusammen mit der untersten Lage der Wand - so ausgebildet werden, dass eine Durchlässigkeit für Kleintiere gegeben ist: Dazu kann der Gesamtrahmen Ausnehmungen aufweisen oder die Drainageschicht/Schüttgutschicht hat innenliegende Kanäle, die auch mit Röhren verstärkt sein können.

Die in Längsrichtung der Lärmschutzwand verlaufenden, auf der Krone aufliegenden erste Konstruktionselemente können etwa Kanthölzer oder Holzbretter oder -latten sein. Diese können in der Mauer befestigt werden, indem etwa Befestigungselemente wie ein- oder mehrendige Pins, Schrauben, Nägel, oder sonstige Stifte durch die Konstruktionselemente getrieben und in den Krone bildenden Strohballen festgelegt werden.

Der für die Gestaltung eines geneigten Dachs wie eines Pult- oder Satteldaches, die hierin vorgeschlagen werden, nötige weitere Unterbau wird durch zweite Konstruktionselemente, von denen zumindest ein Teil mit den ersten Konstruktionselementen verbunden ist, gebildet. Aus zumindest einem Teil der ersten und zusätzlich oder alternativ zweiten Konstruktionselemente wird eine Auflage für Pfetten bzw. pfettenähnliche Streben bereitgestellt.

Das Dach bekommt eine Dachhaut aus Brettern (resp. Planken) oder Ziegelsteinen, die über einer diffusionsoffenen Unterspannbahn angeordnet sind, oder aus Metallblechen, bevorzugt Stahl- oder Aluminium-Blechen, die eine Antikondensatbeschichtung aufweisen, oder aus Kunststoffabdeckelementen, auch Holz ist möglich.

Durch die Unterkonstruktion wird vorteilhaft erreicht, dass zwischen Dach und Krone der Strohballenmauer eine ungehinderte Durchströmung von Luft und ein effektiver Abtransport von Feuchtigkeit möglich ist. Es wird vorgeschlagen, dass, wenn ein Pultdach gewählt ist, dieses zur Hauptwindrichtung geneigt ist. Der First eines Satteldaches sollte als Lüfterfirst ausgebildet sein.

Der Dachüberstand sollte auf beiden Seiten der Strohballenmauer 10% der Wandhöhe, vorteilhaft 15 % oder sogar 20 % betragen.

In noch einer weiteren Ausführungsform der erfindungsgemäßen Lärmschutzwand sind die Befestigungsmittel für die Unterkonstruktion längliche zweiendige Verbindungselemente wie etwa Stricke, Seile oder Ketten. Zur Befestigung der Unterkonstruktion durchgreifen diese Stricke, Seile oder Ketten (oder nur eines davon) die Unterkonstruktion, und umschließen eine oder mehrere Lagen der Strohballen. Die Stricke, Seile oder Ketten werden daher schon bei der Errichtung des Mauerverbandes zwischen zwei Strohballen eingelegt und dann an Vorder- und Rückseite der Strohballenmauer hochgeführt, um sodann die Unterkonstruktion einzubinden.

Es ist auch möglich, als Befestigungsmittel Holzlatten oder Metallstreben zu verwenden, die völlig gleich geführt werden wie ein Seil etwa; sie werden beidseitig der Mauer heruntergeführt und zwischen den Strohballenlagen miteinander verbunden. Die an der Vorder- und der Rückseite der Strohballenwand verlaufenden Längsabschnitte der Holzlatten oder Metallstreben können im Übrigen eine Wandbekleidung tragen.

Das erfindungsgemäße Verfahren zum Errichten einer erfindungsgemäßen Lärmschutzwand umfasst die Schritte:
- entlang einer Grundfläche der Lärmschutzwand Erstellen eines Planums,
- auf dem Planum Anordnen einer Basisschicht mit einer wasserableitenden Funktion,
- auf der Basisschicht Aufsetzen einer Vielzahl an quaderförmigen, unverpackten Strohballen im Mauerverband zu einer Mauer, wobei die Mauer ein Verhältnis einer Tiefe zu einer Höhe von 1:2 bis 1:3 aufweist,
- beim Aufsetzen des Strohballen zu der Mauer in einer vorbestimmten Höhe der Mauer, die höchstens einem Drittel der Gesamthöhe der Mauer entspricht, Positionieren von Befestigungsmitteln zwischen zwei übereinander liegenden Strohballenschichten, dadurch Vorbereiten des Befestigens einer Unterkonstruktion des Dachs,
- über der Mauer Anordnen eines Dachs, dazu
- Herstellen einer Unterkonstruktion des Dachs, dabei auf einer Krone der Mauer in Längsrichtung der Lärmschutzwand Anordnen von ersten Konstruktionselementen, so dass sie in Längsrichtung der Lärmschutzwand verlaufen, und
- Befestigen der Unterkonstruktion durch Umfassen zumindest der Strohballen, die über der vorbestimmten Höhe der Mauer liegen, und zumindest eines der ersten Konstruktionselemente mit den Befestigungsmitteln.

Das Positionieren der Befestigungsmittel aus der Gruppe, die Stricke, Seile, Gurte, Bänder und Ketten, aber auch strebenartige Elemente und Kombinationen der vorgenannten Befestigungsmittel, umfasst, kann derart erfolgen, dass zwischen zwei übereinander liegenden Strohballenschichten das oder die länglichen Befestigungsmittel eingelegt wird/werden, um durch die Strohballenmauer und entlang der Vorderseite und der Rückseite der Mauer zu verlaufen. Die beiden Enden zweiendiger Befestigungsmittel sind dabei zumindest so lang, dass sie ein in Längsrichtung der Lärmschutzwand verlaufendes auf der Krone aufliegendes erstes Konstruktionselement umfassen und durch das Verbinden der beiden Enden des Befestigungsmittels die Unterkonstruktion zum Tragen des Daches auf der Mauer befestigen. In analoger Weise werden strebenartige Elemente derart unter Umgriff der Unterkonstruktion und dem entsprechenden Teil der Strohballenmauer miteinander verbunden, dass die gewünschte Sicherung der Unterkonstruktion und folglich des Dachs gegeben ist.

Das Verfahren sieht für das Herstellen der Unterkonstruktion vor, dass erste und zweite Konstruktionselemente miteinander so verbunden werden, dass quasi Pfetten gebildet werden, die eine Dachneigung für ein Pultdach oder ein Satteldach schaffen; dann wird über den Pfetten die Dachhaut angebracht.

Eine einfache Dachhautgestaltung kann etwa eine Eindeckung aus (un-)behandelten Schal- oder Schwartenbrettern, zweilagig mit versetzten Fugen, vorsehen. Es wird vorgeschlagen, dass deren Witterungsbeständigkeit der der Strohballenmauer entspricht.

Selbstverständlich sind andere Dachhautgestaltungen, siehe oben, möglich.

In der Lärmschutzwand können Öffnungen - vergleichbar Türen - vorgesehen werden, die sich von der Basis nach oben erstrecken. Je nach Breite der Öffnung müssen die darüber liegenden Strohballen gegen Durchbiegung gesichert werden, was etwa durch einen Sturz oder eine ausreichend dimensionierte Balkenlage geschehen kann.

Die erfindungsgemäße Lärmschutzwand kann vorteilhaft durch die quasimodulare Gestaltung aus Rahmenelementen und Strohballen um Objekte wie etwa Bäume herum geführt werden. Bäume können mit passenden Auslassungen im Mauerverband auch innerhalb der Lärmschutzwand stehen bleiben.

Eine erfindungsgemäße Lärmschutzwand kann daher kostengünstig errichtet und rückgebaut werden; weil keine Fundamente und Bodenverdichtungen notwendig sind, kann die Wand auch in schutzbedürftigen Bereichen und damit oft näher an der Lärmquelle errichtet werden. Mit der oben beschriebenen Ausführung ist auch die Haltbarkeit über viele Jahre gewährleistet. Am Ende der Nutzungsdauer kann die erfindungsgemäße Lärmschutzwand komplett dem Stoffkreislauf zugeführt werden, auch die Gestehungsenergie ist deutlich niedriger als die konventioneller Lärmschutzwände. Weitere Vorteile sind, dass obgleich Stroh ein brennbarer Rohstoff ist, dicht gepresste Ballen aber nicht leicht entflammbar sind. Lärmschutzwände müssen nicht zwingend aus nicht brennbarem Material errichtet werden. Eine erfindungsgemäße Lärmschutzwand aus Stroh lädt auch nicht zum Besprühen mit Graffiti ein.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich schematische Darstellungen von Ausführungsformen der Erfindung.

Dabei zeigen:
- **Fig. 1**: eine Seitenansicht einer Lärmschutzwand mit einer Drainageschicht als Basisschicht,
- **Fig. 2**: eine Seitenansicht einer Lärmschutzwand mit einem Rahmen als Basisschicht,
- **Fig. 3**: eine Seitenschnittansicht einer Lärmschutzwand mit durch Seile befestigter Unterkonstruktion des Daches.
- **Fig. 4**: eine Seitenschnittansicht einer Lärmschutzwand mit durch Streben befestigter Unterkonstruktion des Satteldaches (nicht erfindungsgemäß).

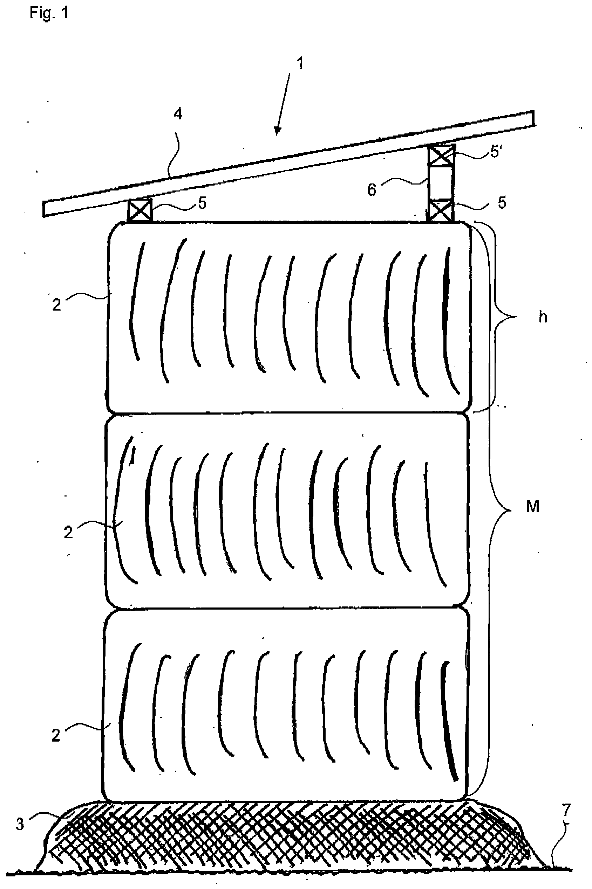

Die erfindungsgemäße Vorrichtung bezieht sich auf eine Lärmschutzwand 1, wie in **Fig. 1 bis 3** gezeigt. Erfindungsgemäß ist das Hauptbaumaterial, das den Dämpfungskörper ergibt, aus Stroh, das in Ballen 2 gepackt ist, beschaffen.

Eine solche Lärmschutzwand wird zur Vorbereitung ihrer Errichtung dimensioniert; es wird vorbestimmt, wie lang die Lärmschutzwand 1 sein soll, welche Grundfläche und Grundflächenform sie überdecken und welche Höhe und Tiefe sie haben soll - was sich wiederum aus dem abzudämpfenden Lärmaufkommen ergibt. Entsprechend der vorstehenden Dimensionen und dem Material ergibt sich das Flächengewicht der Lärmschutzwand 1.

Der Boden respektive Untergrund 7, der nicht Bestandteil der Lärmschutzwand 1 ist, wird zur Durchführung des Errichtungsverfahrens entsprechend dem Verlauf der Lärmschutzwand 1 planiert (Planum 7) und je nach errechnetem (und damit vorbestimmten) Flächengewicht gleichmäßig verdichtet.

Über das so hergestellte Planum 7 kommt als Basisschicht eine Drainage-Schicht 3, wie in **Fig. 1** gezeigt, hier aus Schottersteinen. Alternativ können je nach Verfügbarkeit auch andere großkörnige Materialien wie Kies, Bruchsteine etc. eingesetzt werden.

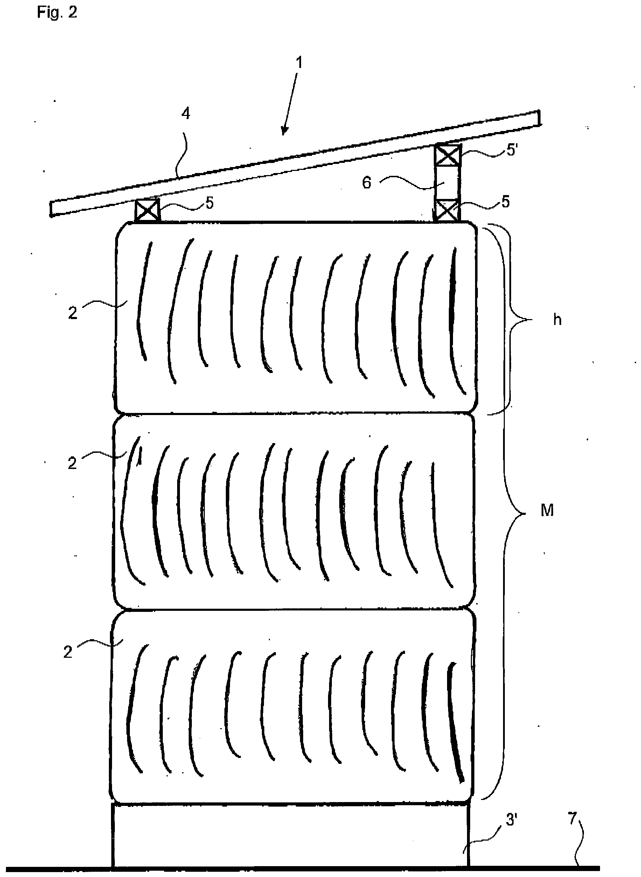

Alternativ kann auf dem Planum 7 statt der Drainage-Schicht 3 auch ein wetterfester Unterbau in Form eines Rahmens 3' angeordnet werden, siehe **Fig. 2****,** um die Basisschicht zu bilden. Der gezeigte Rahmen 3' ist aus verzinktem Stahl und innen zur Stabilisierung verstrebt, figurativ nicht zu sehen. Viele Rahmenelemente 3' können zu einem langen Gesamtrahmen aneinander gefügt werden.

Alternative Rahmenmaterialien können Kunststoff, bspw. Recycle-Kunststoff, sein.

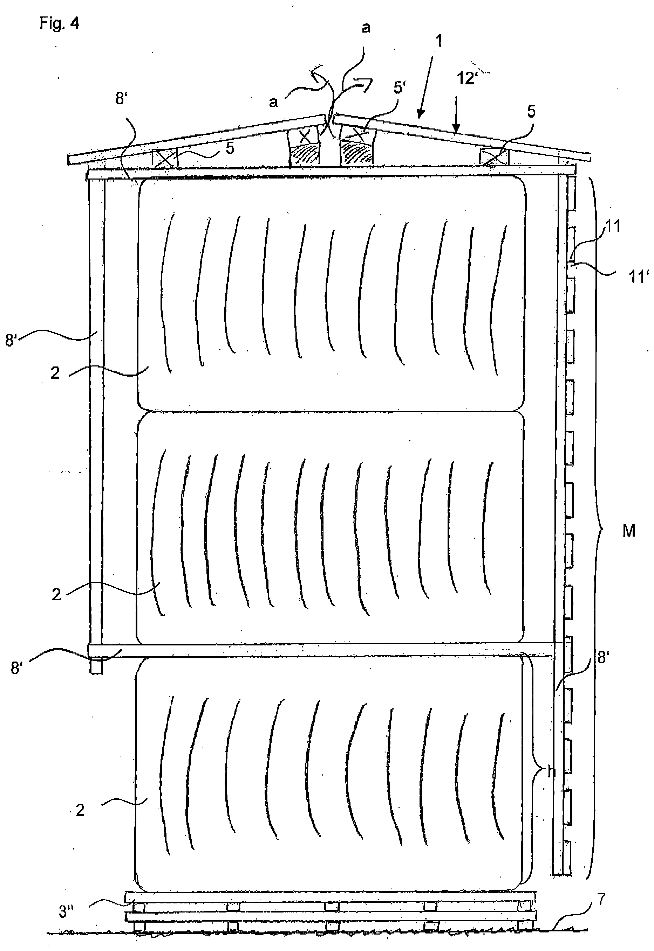

Statt eines Rahmens kann auch, wie **Fig. 4** (nicht erfindungsgemäß) zeigt, eine Struktur aus Gitterelementen, dort aus palettenartigen Gitterelementen 3" auf gleiche Weise eingesetzt werden, wie Rahmenelemente 3'.

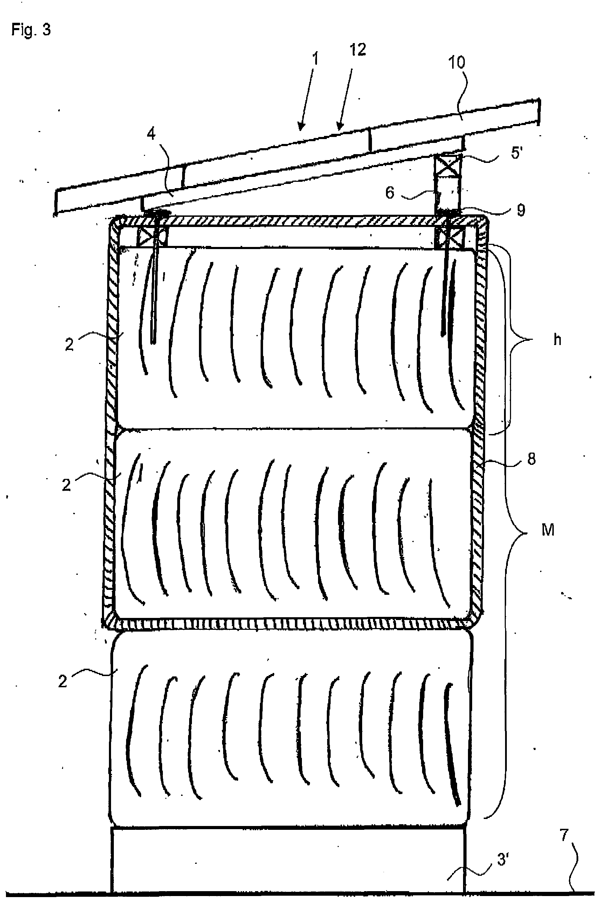

Auf die Drainageschicht 3 wie in **Fig. 1** oder alternativ den Rahmen 3' wie in **Fig. 2** **und** **3** oder die Gitterelemente 3" aus **Fig. 4** (nicht erfindungsgemäß) wird eine Mauer M aus Strohballen 2 aufgesetzt - die Ballen werden im Verband gestapelt. Als Material für die Strohballen 2 eignet sich verschiedenes Stroh unterschiedlicher Getreidesorten und Pflanzen, vorzugsweise nachwachsend und regional verfügbar. In Abhängigkeit von der Getreidesorte bzw. dem Pflanzentyp verändern sich Witterungsbeständigkeit und die Fähigkeit zur Schallabsorption der Ballen und auch die maximale Dichte der Pressung.

Die **Figuren 1 bis 4** (Fig. 4 ist nicht erfindungsgemäß) zeigen quaderförmige Formate, wobei die Quader der für eine vorbestimmte Lärmschutzwand 1 vorgesehenen Strohballen 2 eine einheitliche Höhe h haben sollen. Breite und Länge können je nach den Anforderungen des Lärmschutzwandverbandes variieren.

In Deutschland werden bspw. mit Strohpressen Strohballen 2 mit einer Höhe von 70 cm und einer Breite von 80 cm, alternativ mit einer Breite von 120 cm gepresst. Diese können beispielsweise mit einer Standardlänge von 2,40 m verbaut werden. Mit Längen von 1,60 m, 1,20 m und 0,80 m können Enden, Ecken und Durchlässe realisiert werden. Selbstverständlich sind andere Abmessungen möglich - diese Angaben sind nicht beschränkend zu verstehen.

Die erfindungsgemäß eingesetzten Strohballen 2 sind mit Schnüren gebunden und sie werden nicht mit Netzen oder mit Folie oder breiten Bändern umwickelt.

Die Lärmschutzwand 1 wird mit geeignetem Mauerverband, wie er aus der Mauererrichtung mit konventionellem Steinen bekannt ist, und unter Beachtung der für Mauerwerk geltenden Regeln, aus den quaderförmigen Strohballen 2 auf der Basisschicht errichtet. Die Höhe der Lärmschutzwand 1 richtet sich nach der gewünschten Schallschutzwirkung.

Beispiel: Ballen mit einer Höhe von 70 cm oder alternativ 90 cm und Breiten von 80 cm und 120 cm. Diese werden mit einer Standardlänge von 2,40 m verbaut.

Die Tiefe der Lärmschutzwand 1 ist abhängig von der Höhe und darf das Verhältnis 1:3 nicht unterschreiten. Anzustreben ist ein Verhältnis von 1:2. Je nach Standort und dem dort herrschenden Winddruck oder der für Verkehrsteilnehmer ermittelten Gefährdung oder weiteren Gesichtspunkten wird die Ausbildung der Wand vom Fachmann statisch berechnet.

Die Tiefe der Lärmschutzwand 1 ist in den **Fig. 1 bis 4** (Fig. 4 ist nicht erfindungsgemäß) über die gesamte Höhe gleich, sodass auf beiden Seiten senkrechte Außenseiten gebildet werden.

**Figurativ nicht gezeigt** ist, dass die Lärmschutzwand einen oder mehrere Durchlässe für Personen aufweisen kann. Die Durchlässe erstrecken sich unmittelbar über der Basisschicht nach oben und können je nach ihrer Breite durch über dem Durchlass angeordnete Strohballen oder etwa einen Sturz, bspw. aus einem Balken, stabilisiert werden.

Damit keine Niederschläge von oben in die Ströhballen 2 der Lärmschutzwand 1 eindringen, hat die Wand ein schützendes Dach, das eine Unterkonstruktion aufweist: Grundsätzlich kann die Unterkonstruktion aus verschiedenen in Betracht kommenden Konstruktionsmaterialien aus Metall, Kunststoff, Beton oder vorzugsweise Holz beschaffen sein.

In der beispielhaft figurativ gezeigten Dachkonstruktion der **Figuren 1** **und** **2** sind in Verlaufsrichtung der Lärmschutzwand 1 zwei Reihen Holzlatten 5 ausgelegt und mittels Schrauben 9 **(****Fig. 3****)** in den Krone bildenden Strohballen 2 der Lärmschutzwand 1 befestigt. Vergleichbar den Pfetten eines Dachstuhles ist darauf die Unterkonstruktion 4 aus Konstruktionselementen 6,5' für die Dachhaut 10 gebildet.

Die in **Fig. 3** gezeigte Lärmschutzwand 1 weist als Befestigung der Unterkonstruktion 4 Seile 8 (in der Seitenansicht ist nur ein Seil 8 zu sehen) auf. Wie dort zu sehen ist, ist das Seil 8 dort zwischen die Strohballenlagen 2 so eingelegt, dass es an der Vorderseite und der Rückseite der Lärmschutzwand 1 hochgeführt und mit der Unterkonstruktion verbunden ist. Das Beispiel der **Fig. 3** zeigt, dass das Seil zwei Drittel der Höhe der Lärmschutzwand 1 umfasst und zwischen zwei Strohballenlagen hindurchgeführt ist, um das Abheben des Daches bei Wind und Sturm zu verhindern.

Alternativ können die Befestigungsmittel auch Streben 8' aus Holz, Metall, Kunststoff, Beton oder einer Kombination der vorgenannten Materialien sein.

**Fig. 4** (nicht erfindungsgemäß) zeigt daher jeweils eine an der Vorderseite der Lärmschutzwand 1 vorliegende Strebe 8' aus Holz, die paarig mit einer an der Rückseite der Lärmschutzwand 1 vorliegenden Strebe 8' über eine weitere, horizontal zwischen zwei Strohballenlagen angeordnete Strebe 8' als Kopplungsmittel verbunden ist. Entlang der Lärmschutzwand verlaufen, wie dem Fachmann klar ist, viele derartige Längs- und Kopplungsstreben-Anordnungen. An den Längsstreben 8' der einen Seite der Strohballenmauer M sind als Bekleidungselemente Querstreben 11 angebracht.

Die **Figuren 1 bis** 3 zeigen ein Pultdach 12, das zur Hauptwindrichtung geneigt werden soll, als geeignete Dachform, aber es kann auch ein Satteldach12' wie in **Fig. 4** (nicht erfindungsgemäß) gewählt werden. Der First eines Satteldaches 12' dort ist als Lüfterfirst ausgebildet; die Pfeile a zeigen die Luftströmung an.

Über der Unterkonstruktion wird die sogenannte Dachhaut 10 angebracht, die in **Fig. 3** schematisch als eine Eindeckung aus Schalbrettern resp. Dachplanken 10 gestaltet ist. Figurativ nicht zu sehen ist, dass die Schalbretter zweilagig mit versetzten Fugen angeordnet sind.

Alternativ ist eine Dachhaut aus Ziegelsteinen möglich, wobei dann eine diffusionsoffene Unterspannbahn vorgesehen wird, die das Abtropfen von Kondensat verhindert. Bei Verwendung von - vorzugsweise beschichteten - Stahl- oder Aluminium-Blechen wird eine Antikondensatbeschichtung vorgesehen, die ebenfalls das Abtropfen des Kondensats verhindert.

Die Lärmschutzwand kann unbekleidet bleiben, da sie dann eine sehr gute Schall absorbierende Wirkung hat und ihren Feuchtehaushalt gut reguliert.

Eine Bekleidung der Wandseiten ist aus optischen Gründen und zur Reduzierung der Witterungseinflüsse möglich. Daraus resultiert auch eine verlängerte Haltbarkeit. Wie oben ausgeführt, kann die Bekleidung an den vertikalen Dachbefestigungsstreben befestigt werden.

Eine beispielhafte Bekleidung ist **in** **Fig. 4** (nicht erfindungsgemäß) gezeigt: Dort sind an den längs verlaufenden Befestigungsstreben aus Holz 8' Querstreben 11, ebenfalls aus Holz, so angebracht worden, dass das Bekleidungsholz einen Abstand von 10 cm zu den durch die Strohballen 2 gebildeten Flächen aufweist. Der Abstand kann auch größer als 10 cm sein; es kommt darauf an, zur Trockenhaltung des Strohs eine ausreichende Luftdurchlässigkeit zu schaffen.

Die Bekleidung kann dazu Ausnehmungen wie Schlitze 11' oder Löcher aufweisen.

Die Abstände zwischen den Bekleidungselementen können vertikale oder horizontale

Durchlässe bilden; vor allem an den Stellen, an denen die Mauer einen Durchlass aufweist. Bekleidungselemente können auch versetzt angeordnet werden.

Es ist ebenfalls möglich, die durch die Strohballen gebildeten Wandflächen mit Pflanzen zu verkleiden, wobei die Bepflanzung derart beabstandet vor den Wandflächen vorgesehen ist, dass keine Wurzeln, Triebe oder sonstigen Pflanzenteile in die Strohwand einwachsen können. Rankhilfen wie Drähte, Gitter oder Pflanzmatten werden mit einem Mindestabstand von 10 cm vor der Wandfläche gespannt.

Vorteilhaft bildet die erfindungsgemäße Lärmschutzwand aus Stroh eine im Vergleich zu einer konventionellen Lärmschutzwand erheblich kostengünstigere und dennoch sichere Alternative. Die erfindungsgemäße Lärmschutzwand ist ferner langzeitwitterungsbeständig.

### BEZUGSZEICHENLISTE

- 1: Lärmschutzwand
- 2: Strohballen
- 3: Basisschicht, Drainageschicht,
- 3': Basisschicht, Rahmen
- 3": Basisschicht, palettenartiges Gitterelement
- 4: Pfetten
- 5: Konstruktionselement, Vierkantholz
- 5': Konstruktionselement, Vierkantholz
- 6: Konstruktionselement, Vierkantholz
- 7: Boden, Untergrund
- 8: Seile, Stricke
- 8': Holzstreben
- 9: Schrauben
- 10: Dachhaut, Dachplanken
- 11: Bekleidungsstreben
- 11': Schlitze zwischen Bekleidungsstreben
- 12: Pultdach
- 12': Satteldach

- a: Luftströmung
- h: Höhe eines Strohballens
- M: Mauer aus Strohballen

## Patentansprüche

1. Lärmschutzwand (1), die eine Vielzahl an Strohballen (2) aufweist, und die eine Grundfläche aufweist, auf der die Vielzahl an quaderförmigen, unverpackten Strohballen (2) zu einer Mauer (M) aufgesetzt ist, die eine Tiefe zu einer Höhe im Verhältnis von 1 zu 2 bis 1 zu 3 aufweist,
wobei auf einer die Mauer (M) oberenends abschließenden Krone ein Dach angeordnet ist, das eine Unterkonstruktion aufweist, die in Längsrichtung der Lärmschutzwand (1) verlaufende, auf der Krone aufliegende erste Konstruktionselemente (5) aufweist,
**dadurch gekennzeichnet, dass**
die Grundfläche der Lärmschutzwand (1) durch eine Basisschicht (3) mit einer wasserableitenden Funktion gebildet ist, und die
Mauer (M) im Mauerverband aufgesetzt ist, und
wobei die Unterkonstruktion des Dachs über Befestigungsmittel an der Mauer (M) befestigt ist, die
in einer vorbestimmten Höhe der Mauer (M), die höchstens einem Drittel der Gesamthöhe der Mauer (M) entspricht, zwischen zwei übereinander liegenden Strohballenschichten positioniert sind, sich durch die Mauer (M) erstrecken und jeweils zumindest die Strohballen, die über der vorbestimmten Höhe der Mauer (M) liegen, und zumindest eines der ersten Konstruktionselemente (5) umfassen.

2. Lärmschutzwand (1) nach Anspruch 1,
**dadurch gekennzeichnet, dass**
die Tiefe der Mauer (M) über die gesamte Höhe der Mauer (M) gleich bleibt.

3. Lärmschutzwand (1) nach Anspruch 1 oder 2,
**dadurch gekennzeichnet, dass**
die Strohballen (2)
- eine Dichte von mindestens 200 kg/m³ aufweisen und homogen verpresst sind, und/oder
- aus Strohhalmen mit Halmlängen von 10 bis 20 cm, bevorzugt von 12 bis 18 cm gepresst sind, und/oder
- mit Schnüren gebunden sind.

4. Lärmschutzwand (1) nach zumindest einem der Ansprüche 1 bis 3,
**dadurch gekennzeichnet, dass**
die Basisschicht
- eine Drainageschicht (3) ist, bevorzugt aus einem Drainagematerial, ausgewählt aus der Gruppe umfassend Schottersteine, Kies, Bruchsteine, oder
- durch eines oder mehrere Rahmenelemente (3') oder Gitterelemente, insbesondere palettenartige Gitterelemente (3") aus einem Material aus der Gruppe umfassend Metall, besonders verzinkten Stahl, Kunststoff, Beton, Stein oder einer Kombination aus den vorgenannten Materialien, gebildet ist.

5. Lärmschutzwand (1) nach zumindest einem der Ansprüche 1 bis 4,
**dadurch gekennzeichnet, dass**
die Unterkonstruktion des Dachs
- zweite Konstruktionselemente (5',6), wobei zumindest ein Teil der zweiten Konstruktionselemente (5',6) mit den ersten Konstruktionselementen (5) verbunden ist, aufweist,
und wobei aus zumindest einem Teil der ersten und/oder zweiten Konstruktionselemente (5,5',6) eine Auflage für Pfetten (4) bereitgestellt wird,
- und das Dach eine Dachhaut (10) aufweist, bevorzugt eine Dachhaut aus Brettern, Planken oder Ziegelsteinen, die über einer diffusionsoffenen Unterspannbahn angeordnet sind, oder aus Metallblechen, bevorzugt Stahl- oder Aluminium-Blechen, die eine Antikondensatbeschichtung aufweisen, oder aus Kunststoffabdeckelementen.

6. Lärmschutzwand (1) nach zumindest einem der Ansprüche 1 bis 5,
**dadurch gekennzeichnet, dass**
die Befestigungsmittel längliche zweiendige Verbindungselemente sind und bevorzugt ausgewählt sind aus der Gruppe umfassend Stricke (8), Seile, Gurte, Bänder, Ketten und Streben aus Holz (8'), Metall oder Kunststoff, sowie Kombinationen sämtlicher vorgenannten Befestigungsmittel, und wobei eines oder mehrere der Befestigungsmittel zumindest eines der ersten Konstruktionselemente (5) und eine oder mehrere Lagen der Strohballen umfassen und durch das Verbinden der beiden Enden der zweiendigen Befestigungsmittel (8,8') die Unterkonstruktion an der Mauer befestigen.

7. Lärmschutzwand (1) nach zumindest einem der Ansprüche1 bis 6,
**dadurch gekennzeichnet, dass**
eines oder mehrere der in Längsrichtung der Lärmschutzwand (1) verlaufenden, auf der Krone aufliegenden ersten Konstruktionselemente (5) mit Befestigungselementen aus der Gruppe umfassend ein- oder mehrendige Pins, Schrauben (9), Nägel, Stifte auf dem oder den die Krone bildenden Strohballen verankert ist/sind.

8. Verfahren zum Errichten einer Lärmschutzwand (1) nach zumindest einem der Ansprüche 1 bis 7,
**umfassend die Schritte**
- entlang einer Grundfläche der Lärmschutzwand (1) Erstellen eines Planums (7),
- auf dem Planum (7) Anordnen einer Basisschicht (3) mit einer wasserableitenden Funktion,
- auf der Basisschicht Aufsetzen einer Vielzahl quaderförmiger, unverpackter Strohballen (2) im Mauerverband zu einer Mauer (M), wobei die Mauer (M) ein Verhältnis einer Tiefe zu einer Höhe von 1 zu 2 bis 1 zu 3 aufweist,
- beim Aufsetzen der Strohballen zu der Mauer (M) in einer vorbestimmten Höhe der Mauer (M), die höchstens einem Drittel der Gesamthöhe der Mauer (M) entspricht, Positionieren von Befestigungsmitteln zwischen zwei übereinander liegenden Strohballenschichten, dadurch Vorbereiten des Befestigens einer Unterkonstruktion des Dachs,
- über der Mauer (M) Anordnen eines Dachs, dazu
- Herstellen einer Unterkonstruktion des Dachs, dabei auf der Krone der Mauer (M) in Längsrichtung der Lärmschutzwand (1) Anordnen von ersten Konstruktionselementen (5), so dass sie in Längsrichtung der Lärmschutzwand (1) verlaufen, und
- Befestigen der Unterkonstruktion durch Umfassen zumindest der Strohballen, die über der vorbestimmten Höhe der Mauer (M) liegen, und zumindest eines der ersten Konstruktionselemente (5) mit den Befestigungsmitteln.

9. Verfahren nach Anspruch 8,
**umfassend die Schritte**
- Positionieren der Befestigungsmittel derart zwischen zwei übereinander liegenden Strohballenschichten, dass das oder die länglichen zweiendigen Verbindungselement/e (8,8') bereitgestellt ist/sind, um durch die Mauer (M) und entlang der Vorderseite und der Rückseite der Mauer (M) zu verlaufen und zumindest jeweils eines der in Längsrichtung der Lärmschutzwand (1) verlaufenden auf der Krone aufliegenden ersten Konstruktionselemente (5) zu umfassen und durch das Verbinden der beiden Enden der zweiendigen Verbindungselemente (8,8') die Unterkonstruktion zum Tragen des Daches auf der Mauer (M) zu befestigen.

10. Verfahren nach Anspruch 8 oder 9,
**umfassend den Schritt**
- Verankern der Konstruktionselemente (5) mit Befestigungsmitteln aus der Gruppe umfassend ein- oder mehrendige Pins, Schrauben (9), Nägel, Stifte auf dem oder den die Krone bildenden Strohballen.

11. Verfahren nach Anspruch 9 oder 10,
**umfassend die Schritte**
- Herstellen der Unterkonstruktion, indem über den ersten Konstruktionselementen (5) zweite Konstruktionselemente (5',6) angeordnet und so mit diesen verbunden werden, dass die zweiten Konstruktionselemente (5',6) eine Auflage für Pfetten (4) bilden, dabei Bereitstellen einer Dachneigung zur Ausbildung eines Pultdaches (12) oder eines Satteldaches (12'), dann
- über den Pfetten (4) Anordnen der Dachhaut (10), und bevorzugt
- nach dem Herstellen der Unterkonstruktion aneinander Festlegen der beiden jeweiligen Enden eines Befestigungsmittels für die Unterkonstruktion.

## Claims

1. A noise barrier (1), which has a plurality of bales of straw (2), and which has a base area, to which the plurality of cuboidal, unpackaged bales of straw (2) are attached to form a wall (M), which has a depth to a height in the ratio of between 1 to 2 and 1 to 3,
wherein, on a crown completing the wall (M) at the top end, a roof is arranged, which has a substructure, which has first construction elements (5) running in the longitudinal direction of the noise barrier (1) and resting on the crown,
**characterised in that**
the base area of the noise barrier (1) is formed by a base layer (3) with a water-repellent function, and the
wall (M) is attached in masonry bond, and
wherein the substructure of the roof is fastened to the wall (M) via fastening means, which
are positioned at a predetermined height of the wall (M), which corresponds maximally to one third of the total height of the wall (M), between two layers of bales of straw located one on top of the other, extend through the wall (M), and in each case encompass at least the bales of straw, which are located above the predetermined height of the wall (M), and at least one of the first construction elements (5).

2. The noise barrier (1) according to claim 1,
**characterised in that**
the depth of the wall (M) remains the same over the entire height of the wall (M).

3. The noise barrier (1) according to claim 1 or 2,
**characterised in that**
the bales of straw (2)
- have a density of at least 200 kg/m³ and are homogenously pressed, and/or
- are pressed of stalks of straw having stalk lengths of between 10 and 20 cm, preferably between 12 and 18 cm, and/or
- are tied with strings.

4. The noise barrier (1) according to at least any one of claims 1 to 3,
**characterised in that**
the base layer
- is a drainage layer (3), preferably made of a drainage material, selected from the group comprising ballast stones, gravel, quarry stones, or
- is formed by one or several frame elements (3') or grid elements, in particular pallet-like grid elements (3") made of a material from the group comprising metal, in particular galvanized steel, plastic, concrete, stone or a combination of the aforementioned materials.

5. The noise barrier (1) according to at least any one of claims 1 to 4,
**characterised in that**
the substructure of the roof
- has second construction elements (5', 6), wherein at least a portion of the second construction elements (5', 6) is connected to the first construction elements (5), and wherein a support for purlins (4) is provided from at least a portion of the first and/or second construction elements (5, 5', 6),
- and the roof has a roof cladding (10), preferably a roof cladding of boards, planks, or bricks, which are arranged above a vapor-permeable underlay, or of metal sheets, preferably steel or aluminium sheets, which have an anti-condensation coating, or of plastic cover elements.

6. The noise barrier (1) according to at least any one of claims 1 to 5,
**characterised in that**
the fastening means are elongated double-ended connecting elements and are preferably selected from the group comprising ropes (8), cords, straps, bands, chains, and struts made of wood (8'), metal, or plastic, as well as combinations of all aforementioned fastening means, and wherein one or several of the fastening means encompass at least one of the first construction elements (5) and one or several layers of the bales of straw, and fasten the substructure to the wall by connecting the two ends of the double-ended fastening means (8, 8').

7. The noise barrier (1) according to at least any one of claims 1 to 6,
**characterised in that**
one or several of the first construction elements (5), which run in the longitudinal direction of the noise barrier (1) and which rest on the crown, is/are anchored to the bale or bales of straw forming the crown by means of fastening elements from the group comprising one-ended or double-ended pins, screws (9), nails, tacks.

8. A method for erecting a noise barrier (1) according to at least any one of claims 1 to 7,
**comprising the steps**
- creating a planum (7) along a base area of the noise barrier (1),
- arranging a base layer (3) with a water-repellent function on the planum (7),
- attaching a plurality of cuboidal, unpackage bales of straw (2) to the base layer in masonry bond to form a wall (M), wherein the wall (M) has a ratio of a depth to a height of between 1 to 2 and 1 to 3,
- positioning fastening means between two layers of bales of straw located one on top of the other at a predetermined height of the wall (M), which corresponds maximally to one third of the total height of the wall (M), when attaching the bales of straw to form the wall (M), thus preparing the fastening of a substructure of the roof,
- arranging a roof above the wall (M), for this purpose
- creating a substructure of the roof, thereby arranging first construction elements (5) on the crown of the wall (M) in the longitudinal direction of the noise barrier (1), so that said first construction elements run in the longitudinal direction of the noise barrier (1), and
- fastening the substructure by encompassing at least the bales of straw, which are located above the predetermined height of the wall (M), and at least one of the first construction elements (5) by means of the fastening means.

9. The method according to claim 8,
**comprising the steps of**
- positioning the fastening means between two layers of bales of straw located one on top of the other in such a way that the elongated double-ended connecting element or elements (8, 8') is/are provided in order to run through the wall (M) and along the front side and the rear side of the wall (M), and to in each case encompass at least one of the first construction elements (5), which run in the longitudinal direction of the noise barrier (1) and rest on the crown, and to fasten the substructure for supporting the roof on the wall (M) by connecting the two ends of the double-ended connecting elements (8, 8').

10. The method according to claim 8 or 9,
**comprising the step of**
- anchoring the construction elements (5) by means of fastening means from the group comprising one- or double-ended pins, screws (9), nails, tacks on the bale or bales of straw forming the crown.

11. The method according to claim 9 or 10,
**comprising the steps of**
- creating the substructure, in that second construction elements (5', 6) are arranged above the first construction elements (5) and are connected to the latter such that the second construction elements (5, 6') form a support for purlins (4), thereby providing a roof pitch for forming a pitch roof (12) or of a gabled roof (12'), then
- arranging the roof cladding (10) above the purlins (4), and preferably
- securing the two respective ends of a fastening means for the substructure after creating the substructure.

## Revendications

1. Écran acoustique (1) présentant une pluralité de bottes de paille (2) et une surface de base sur laquelle la pluralité de bottes de paille (2) parallélépipédiques en vrac est posée en un mur (M) qui présente une profondeur-hauteur dans un rapport de 1:2 à 1:3,
dans lequel un toit présentant une structure porteuse qui présente des premiers éléments de construction (5) reposant sur une couronne et s'étendant dans le sens longitudinal de l'écran acoustique (1), est disposé sur la couronne terminant le mur (M) à l'extrémité supérieure,
**caractérisé en ce que**
la surface de base de l'écran acoustique (1) est formée d'une couche de base (3) avec une fonction d'évacuation d'eau et le
mur (M) est posé en maçonnerie et
la structure porteuse du toit étant fixée au mur (M) avec des moyens de fixation qui sont positionnés entre deux couches de bottes de paille superposées à une hauteur prédéfinie du mur (M) qui correspond au plus à un tiers de la hauteur totale du mur (M), qui s'étendent à travers le mur (M) et qui englobent respectivement au moins les bottes de paille qui se trouvent au-dessus de la hauteur prédéfinie du mur (M) et au moins l'un des premiers éléments de construction (5).

2. Écran acoustique (1) conformément à la revendication 1,
**caractérisé en ce que**
la profondeur du mur (M) reste la même sur toute la hauteur du mur (M).

3. Écran acoustique (1) conformément à la revendication 1 ou 2,
**caractérisé en ce que**
les bottes de paille (2)
- présentent une densité d'au moins 200 kg/m³ et sont comprimées de façon homogène
et/ou
- sont comprimées à partir de pailles avec des longueurs de 10 à 20 cm, préférablement de 12 à 18 cm et/ou
- sont liées avec des ficelles.

4. Écran acoustique (1) conformément au moins à l'une des revendications 1 à 3,
**caractérisé en ce que**
la couche de base
- est une couche de drainage (3), préférablement dans un matériau drainant sélectionné dans le groupe comprenant des galets, du gravier, des moellons ou
- est formée par un ou plusieurs éléments de bâti (3') ou éléments de treillis, en particulier des éléments de treillis (3") de type palette dans un matériau du groupe comprenant le métal, en particulier l'acier zingué, le plastique, le béton, la pierre ou une combinaison des matériaux précités.

5. Écran acoustique (1) conformément au moins à l'une des revendications 1 à 4,
**caractérisé en ce que**
la structure porteuse du toit
- présente des deuxièmes éléments de construction (5',6), au moins une partie des deuxièmes éléments de construction (5',6) étant reliée aux premiers éléments de construction (5),
et un support pour pannes (4) étant mis à disposition à partir au moins d'une partie des premiers et/ou deuxièmes éléments de construction (5,5',6),
- et le toit présentant une couverture (10), de préférence une couverture composée de panneaux, planches ou briques qui sont disposés au-dessus d'un écran de sous-toiture à diffusion ouverte, ou bien de tôles métalliques, préférablement des tôles en acier ou en aluminium, qui présentent un revêtement anti-condensation, ou bien d'éléments de recouvrement en plastique.

6. Écran acoustique (1) conformément au moins à l'une des revendications 1 à 5,
**caractérisé en ce que**
les moyens de fixation sont des éléments de liaison oblongs à deux extrémités et sont préférablement sélectionnés dans le groupe comprenant des tricots (8), des cordes, des sangles, des courroies, des chaînes et des entretoises en bois (8'), en métal ou en plastique, ainsi que des combinaisons de tous les moyens de fixation précités et un ou plusieurs des moyens de fixation comprenant au moins l'un des premiers éléments de construction (5) et une ou plusieurs couches de bottes de paille et fixant la structure porteuse au mur par la liaison des deux extrémités des moyens de fixation (8,8') à deux extrémités.

7. Écran acoustique (1) conformément au moins à l'une des revendications 1 à 6,
**caractérisé en ce que**
un ou plusieurs des premiers éléments de construction (5) reposant sur la couronne et s'étendant dans le sens longitudinal de l'écran acoustique (1) est ou sont ancré(s) sur la ou les bottes de paille formant la couronne avec des éléments de fixation du groupe comprenant des broches à une ou plusieurs extrémités, des vis (9), des pointes, des goujons.

8. Procédé de construction d'un écran acoustique (1) conformément au moins à l'une des revendications 1 à 7,
**comprenant les étapes**
- le long d'une surface de base de l'écran acoustique (1), construction d'une plate-forme (7),
- sur la plate-forme (7), disposition d'une couche de base (3) avec une fonction d'évacuation d'eau,
- sur la couche de base, pose d'une pluralité de bottes de paille (2) parallélépipédiques en vrac dans la maçonnerie en un mur (M), le mur (M) présentant une profondeur-hauteur dans un rapport de 1:2 à 1:3,
- lors de la pose des bottes de paille (2) en mur (M) à une hauteur prédéfinie du mur (M) qui correspond au plus à un tiers de la hauteur totale du mur (M), positionnement de moyens de fixation entre deux couches de bottes de paille superposées, ainsi préparation de la fixation d'une structure porteuse du toit,
- au-dessus du mur (M), disposition d'un toit, à cet effet
- fabrication d'une structure porteuse du toit, ainsi sur la couronne du mur (M) dans le sens longitudinal de l'écran acoustique (1), disposition de premiers éléments de construction (5) de telle manière à ce qu'ils s'étendent dans le sens longitudinal de l'écran acoustique (1) et
- fixation de la structure porteuse par le fait qu'elle englobe au moins les bottes de paille qui se trouvent au-dessus de la hauteur prédéfinie du mur (M) et au moins l'un des premiers éléments de construction (5) avec les moyens de fixation.

9. Procédé conformément à la revendication 8,
**comprenant les étapes**
- positionnement des moyens de fixation de telle manière à ce que, entre deux couches de bottes de paille superposées, le ou les éléments de liaison (8,8') oblongs à deux extrémités est ou sont mis à disposition pour s'étendre à travers le mur (M) et le long de la face avant et de la face arrière du mur (M), pour englober au moins l'un des premiers éléments de construction (5) reposant sur la couronne et s'étendant dans le sens longitudinal de l'écran acoustique (1) et pour fixer la structure porteuse supportant le toit sur le mur (M) par la liaison des deux extrémités des éléments de liaison (8,8') à deux extrémités.

10. Procédé conformément à la revendication 8 ou 9,
**comprenant les étapes**
- ancrage des éléments de construction (5) avec des moyens de fixation du groupe comprenant des broches à une ou plusieurs extrémités, des vis (9), des pointes, des goujons sur la ou les bottes de paille formant la couronne.

11. Procédé conformément à la revendication 9 ou 10,
**comprenant les étapes**
- fabrication de la structure porteuse par la disposition des deuxièmes éléments de construction (5',6) au-dessus des premiers éléments de construction (5) et par la liaison avec ces derniers de telle manière à ce que les deuxièmes éléments de construction (5',6) forment un support pour pannes (4), à cet effet mise à disposition d'une pente de toit pour la formation d'un toit en appentis (12) ou d'un toit à pignon (12'), puis
- au-dessus des pannes (4), disposition de la couverture (10) et préférablement
- après la fabrication de la structure porteuse, détermination des deux extrémités respectives d'un moyen de fixation pour la structure porteuse.
